# EUROPEAN PATENT APPLICATION

(11) **EP 4 535 100 A1**
(43) Date of publication of application: **09.04.2025**
(21) Application number: 24202611.0
(22) Date of filing: 25.09.2024
(51) Int. Cl.: G05B 19/05

(54) **SYSTEMS AND METHODS OF IMPLEMENTING DISTRIBUTED CONTROLLER CONNECTIONS WITHIN INDUSTRIAL SYSTEMS**

(30) Priority: 03.10.2023 US 202318480365
(71) Applicant: Rockwell Automation Technologies, Inc., Mayfield Heights, OH 44124 (US)
(72) Inventor: Dotson, Gary Dan, Mayfield Heights, Ohio, 44124 (US)
(74) Representative: Grünecker Patent- und Rechtsanwälte PartG mbB

(57) **Abstract**

Systems and methods for providing distributed controller connections within industrial systems. One system may include an Ethernet physical media configured to facilitate a packetized cache-coherency protocol across a plurality of industrial controllers of an industrial system. The system may also include an industrial personal computer ("IPC") included in the plurality of industrial controllers, where the IPC may be configured to control at least a first portion of an industrial process of the industrial system. The system may also include a programmable logic controller ("PLC") included in the plurality of industrial controllers, where the PLC may be directly connected to the PLC with the Ethernet physical media and configured to control at least a second portion of the industrial process of the industrial system.

## Description

### CROSS-REFERENCES TO RELATED APPLICATIONS

Not applicable.

### BACKGROUND INFORMATION

Industrial controllers are specialized computer systems used for the control of industrial processes or machinery, for example, in a factory environment. Generally, an industrial controller executes a stored control program that reads inputs from a variety of sensors associated with the controlled process and machine and, sensing the conditions of the process or machine and based on those inputs and a stored control program, calculates a set of outputs used to control actuators controlling the process or machine.

Industrial controllers differ from conventional computers in a number of ways. Physically, they are constructed to be substantially more robust against shock and damage and to better resist external contaminants and extreme environmental conditions than conventional computers. The processors and operating systems are optimized for real-time control and are programmed with languages designed to permit rapid development of control programs tailored to a constantly varying set of machine control or process control applications.

### SUMMARY

The following presents a simplified summary of the disclosed technology herein in order to provide a basic understanding of some aspects of the disclosed technology. This summary is not an extensive overview of the disclosed technology. It is intended neither to identify key or critical elements of the disclosed technology nor to delineate the scope of the disclosed technology. Its sole purpose is to present some concepts of the disclosed technology in a simplified form as a prelude to the more detailed description that is presented later.

The technology disclosed herein relates generally to industrial systems, and, more particularly, to implementing distributed controller connections within industrial systems, such as, e.g., by leveraging Ethernet and cache coherency protocols and technology.

Industrial controllers are specialized computer systems used for the control of industrial systems or machinery, for example, in a factory environment. In some instances, an industrial system may be a multiprocessor system (e.g., an industrial system with multiple industrial controllers), which may enable parallel processing with respect to an industrial process executed by the industrial system. As such, an industrial system may include multiple interconnected industrial controllers (or control devices), such as, e.g., industrial personal computers ("IPCs"), programmable logic controllers ("PLCs"), etc. As one example, an industrial system may include an edge IPC connected to a PLC.

Some industrial systems may implement a high-speed serial expansion bus standard for interconnected industrial controllers (e.g., an edge IPC connected to a PLC), such as, e.g., peripheral component interconnect express ("PCIe" or "PCI-E"). While such industrial systems enable distributed task execution and communication between interconnected industrial controllers, such distributed controller connection may pose various technical problems and challenges. For example, an IPC may be the root complex and is not hot swappable. Therefore, maintenance of the IPC may result in powering down or restarting the PLC. For example, restarting the IPC may disrupt the PLC. Furthermore, independent upgrade of the IPC firmware and the PLC firmware may result in disruptions to the industrial system. Additionally, such distributed controller connection approaches may include security risks (e.g., external PCIe can be snooped to hack or counterfeit controller operation), increased expense and cost (e.g., expense of custom design or high-cost short distance interconnect solution), decreased electromagnetic compatibility ("EMC") robustness (e.g., PCIe interconnect is not EMC robust due to ground-to-ground connection), etc. In some instances, distributed controller connection approaches may include development of customized modules that enable the interconnected industrial controllers to interact. As a result, in order to effectively incorporate an additional IPC or PLC to an industrial system may involve accessing or developing a customized module for that additional IPC or PLC.

To solve these and other technical problems associated with distributed controller connections within industrial systems, the technology disclosed herein may implement distributed controller connections within industrial systems, such as, e.g., by following the rules of standard Ethernet (i.e., IEEE 802 compliance) in order to leverage standard off-the shelf hardware and cache coherency protocols and technology. For example, in some configuration, the technology disclosed herein implements distributed controller connections using standard Ethernet connections (as opposed to non-standard Ethernet protocols, or other connections, e.g., PCIe). Implementing distributed controller connections within industrial systems using Ethernet and cache coherency protocols and technology mitigates the technical problems noted above. For instance, Ethernet is hot swappable, such that maintenance of an IPC does not result in powering down or restarting a PLC. Further, utilizing Ethernet may also reduce (or eliminate) disruptions during upgrades, maintenance, and rebooting of the PLC, the IPC, or a combination thereof. For example, disruptions to the PLC may be eliminated when the IPC is restarted, disruptions during independent upgrade of IPC firmware and PLC firmware may be reduced or eliminated, etc. Implementation of Ethernet increases security while reducing expenses and costs. Additionally, IPC and PLC power is independent (e.g., power dependency on the IPC is reduced or eliminated for the PLC).

Accordingly, the technology disclosed herein may provide reduce expenses and costs associated with the development and resources while providing enhanced system performances and capabilities. For instance, the technology disclosed herein supports improved performance without developing a high-end customized product, which results in reduced development cost and resource savings as while as expediting time to market. For example, when incorporating an additional IPC or PLC into an industrial system, the development or access to a customized module for an additional IPC or PLC that is being incorporated into an industrial system may be eliminated as existing hardware may be utilized by the technology disclosed herein. The technology disclosed herein supports scalability to address low axes and high axes solutions with a common product design which results in cost savings from development through the supply chain. For instance, the technology disclosed herein may address large scale systems without a supercomputer (e.g., systems including 5,000-10,000 Axes, such as systems associated with autonomous mobile robots, magnemotion, warehousing, etc.). Additionally, the technology disclosed herein may provide scalable fault tolerant redundancy, such as, e.g., scalable fault tolerant redundancy that fits future software defined architecture plans, which may reduce development cost and provide resource savings. For example, the technology disclosed herein may support scalable fault tolerant redundancy such that high availability may be provided in parallel with distributed processing (e.g., three motion controllers and three cross linked redundant motion controllers).

Accordingly, the technology described herein provides systems and methods for implementing distributed controller connections within industrial systems. One configuration may include a system for connecting distributed controllers within industrial systems. The system may include a cross-controller interface including an Ethernet physical media configured to establish a communication channel to maintain cache-coherency across a plurality of industrial controllers of an industrial system. The system may also include a first industrial controller of the plurality of industrial controllers, the first industrial controller configured to control at least a first portion of an industrial process of the industrial system. The system may also include a second industrial controller of the plurality of industrial controllers, the second industrial controller directly connected to the first industrial controller via the cross-controller interface and configured to control at least a second portion of the industrial process of the industrial system.

Another configuration may include a method of providing distributed controller connections within industrial systems. The method may include providing a plurality of industrial controllers for an industrial system, wherein the plurality of industrial controllers are configured to perform coprocessing for an industrial process of the industrial system. The method may include establishing, with an Ethernet cable, a direct Ethernet interconnect between a first industrial controller of the plurality of industrial controllers and a second industrial controller of the plurality of industrial controllers. The method may include executing, with the first industrial controller and the second industrial controller, the industrial process of the industrial system. The method may include, while executing the industrial process with the first industrial controller and the second industrial controller, maintaining cache-coherency across the plurality of industrial controllers in accordance with a packetized cache-coherency protocol.

Yet another configuration may include a system for connecting distributed controllers within industrial systems. The system may include an Ethernet physical media configured to facilitate a packetized cache-coherency protocol across a plurality of industrial controllers of an industrial system. The system may also include an industrial personal computer ("IPC") included in the plurality of industrial controllers, the IPC configured to control at least a first portion of an industrial process of the industrial system. The system may also include a programmable logic controller ("PLC") included in the plurality of industrial controllers, the PLC directly connected to the PLC with the Ethernet physical media and configured to control at least a second portion of the industrial process of the industrial system.

The foregoing and other aspects and advantages of the present disclosure will appear from the following description. In the description, reference is made to the accompanying drawings which form a part hereof, and in which there is shown by way of illustrations one or more embodiments of the present disclosure. Such configurations do not necessarily represent the full scope of the present disclosure, however, and reference is made therefore to the claims and herein for interpreting the scope of the present disclosure.

### BRIEF DESCRIPTION OF DRAWINGS

The present disclosure will be better understood and features, aspects and advantages other than those set forth above will become apparent when consideration is given to the following detailed description thereof. Such detailed description makes reference to the following drawings.
FIG. 1 schematically illustrates a system for providing distributed controller connections for industrial systems according to some configurations.
FIG. 2 schematically illustrates an example industrial controller of the system of FIG. 1 according to some configurations.
FIGS. 3-13 illustrate example distributed controller connection arrangements according to some configurations.
FIG. 14 is a flowchart illustrating a method for providing distributed controller connections for industrial systems in accordance with some configurations.

### DETAILED DESCRIPTION

As utilized herein, terms "component," "system," "controller," "device," "manager," and variants thereof are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server may be a component. One or more components may reside within a process and/or thread of execution and a component may be localized on one computer and/or distributed between two or more computers.

The disclosed technology is described with reference to the drawings, wherein like reference numerals are used to refer to like elements throughout. In the following description, for purposes of explanation, numerous specific details are set forth in order to provide a thorough understanding of the disclosed technology. It may be evident, however, that the disclosed technology may be practiced without these specific details. In other instances, well-known structures and devices are shown in block diagram form in order to facilitate describing the disclosed technology.

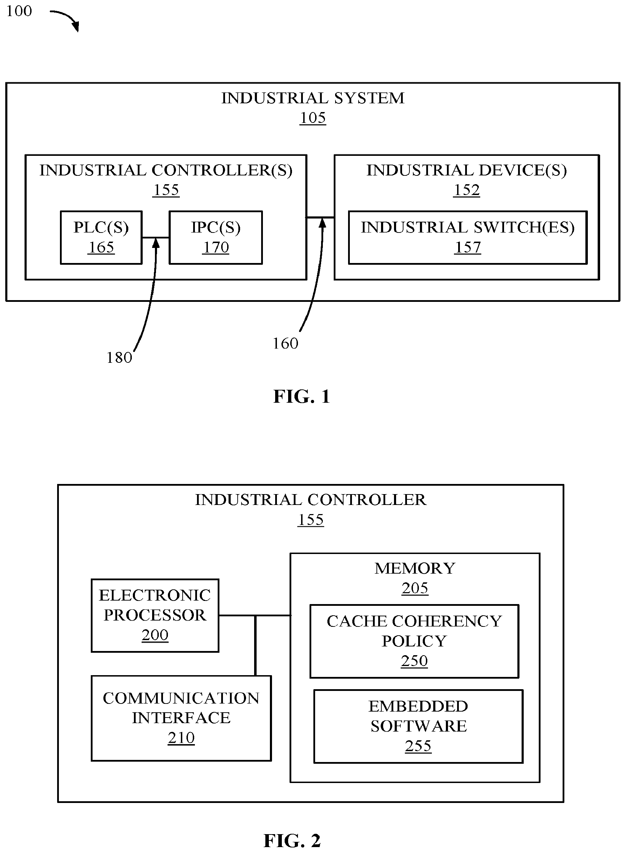

FIG. 1 schematically illustrates a system 100 for providing distributed controller connections for industrial systems according to some configurations. In the illustrated example, the system 100 may include an industrial system 105. In some configurations, the system 100 includes fewer, additional, or different components in different configurations than illustrated in FIG. 1. As one example, the system 100 may include multiple industrial systems 115.

The industrial system 105 may be a manufacturing system, such as, e.g., an industrial automation system or the like. The industrial system 105 may be associated with (or located at) a facility or site. In some configurations, a facility or site may be associated with multiple industrial systems 105 (e.g., a first industrial system, a second industrial system, a third industrial system, etc.). Alternatively, or in addition, in some configurations, the system 100 may include a first industrial system located at a first facility and a second industrial system located as a second facility different from the first facility.

The industrial system 105 may perform one or more industrial processes, manufacturing processes, production processes, or the like. In some configurations, the industrial system 105 may perform a production method that produces goods or products. As one example, the industrial system 105 may perform a vehicle manufacturing processor to assemble or produce a vehicle (or various components thereof). As another example, the industrial system 105 may perform a food manufacturing process for making a food product. As yet another example, the industrial system 105 may perform a pharmaceutical manufacturing process for producing pharmaceuticals.

In the illustrated example, the industrial system 105 may include one or more industrial devices 152 (referred to herein collectively as "the industrial devices 152" and individually as "the industrial device 152") and one or more industrial controllers 155 (referred to herein collectively as "the industrial controllers 155" and individually as "the industrial controller 155"). The industrial device 152, the industrial controller 155, or a combination thereof may be a physical piece of equipment included in the industrial system 105. For example, an industrial device 152 may include a pump, a press, a conveyor, a valve, a switch, a sensor, a server, a database, a human-machine interface ("HMI"), another piece of equipment that may be used in connection with an associated industrial process or application of the industrial system 105, or the like. In the illustrated example, of FIG. 1, the industrial device 152 may be an industrial switch 157. In such configurations, the industrial switch 157 may facilitate the transmission of communication within and external to the industrial system 105.

The industrial device(s) 152 and the industrial controller(s) 155 may communicate over one or more wired or wireless communication networks 160. Portions of the communication networks 160 may be implemented using a wide area network, such as the Internet, a local area network, such as BLUETOOTH^{®} or WI-FI^{®}, and combinations or derivatives thereof. Alternatively, or in addition, in some configurations, the industrial device(s) 152 and the industrial controller(s) 155 may communicate through one or more intermediary devices not illustrated in FIG. 1.

As illustrated in FIG. 1, the industrial controllers 155 may include one or more programmable logic controllers ("PLCs") 165 (referred to herein collectively as "the PLCs 165" and individually as "the PLC 165") and one or more IPCs 170 (referred to herein collectively as "the IPCs 170" and individually as "the IPC 170"). In some configurations, the industrial controller(s) 155 may be communicatively coupled to at least one industrial device 152 included in the industrial system 105 such that the industrial controller(s) 155 may control an operation or functionality associated with the at least one industrial device 152 included in the industrial system 105.

In some configurations, the industrial system 105 may be a multi-processor (or multi-industrial controller) system. In such configurations, the industrial controllers 155 may provide co-processing capabilities or functionality, such as, e.g., when executing an industrial process of the industrial system 105. For example, in some instances, the industrial system 105 may include an edge IPC (e.g., the IPC 170) connected to one or more PLCs (e.g., the PLCs 165). Alternatively, or in addition, in some configurations, the industrial system 105 may include multiple interconnected PLCs (e.g., a first PLC interconnected to a second PLC).

In some configurations, the industrial system 105 may include a cross-controller interface 180, as illustrated in FIG. 1. The cross-controller interface 180 may interconnect one or more of the industrial controllers 155. In the example of FIG. 1, the cross-controller interface 180 connects the PLC 165 and the IPC 170.

In such configurations, the interconnected industrial controllers 155 may form an industrial control network for the industrial system 105. The industrial control network may be, e.g., a local area network. In some configurations, the industrial control network may be an Ethernet network. In such configurations, the cross-controller interface 180 may include an Ethernet cable communicatively coupling the industrial controllers 155 (e.g., an Ethernet port of each respective industrial controller 155). As illustrated in FIG. 1, in some configurations, the industrial controllers 155 (e.g., the PLC 165 and the IPC 170) may be directly coupled via the cross-controller interface 180 (e.g., an Ethernet cable) such that the industrial controllers 155 may communicate directly (as opposed to communicating through an intermediary device, such as, e.g., a router or switch (e.g., the industrial switch 157)).

FIG. 2 illustrates an example industrial controller 155 according to some configurations. The example industrial controller 155 of FIG. 2 may be a representative example of the PLC 165, the IPC 170, or a combination thereof. As illustrated in FIG. 2, the industrial controller 155 may include an electronic processor 200, a memory 205, and a communication interface 210. The electronic processor 200, the memory 205, and the communication interface 210 may communicate wirelessly, over one or more communication lines or buses, or a combination thereof. The industrial controller 155 may include additional, different, or fewer components than those illustrated in FIG. 2 in various configurations. As one example, the industrial controller 155 may include a human-machine interface ("HMI"), which may include one or more input devices, one or more output devices, or a combination thereof, for interacting with a user. The industrial controller 155 may also perform additional functionality other than the functionality described herein. Also, the functionality (or a portion thereof) described herein as being performed by the industrial controller 155 may be distributed among multiple devices, combined with another device, or a combination thereof.

The communication interface 210 may include a transceiver that communicates with the industrial device(s) 152, another industrial controller 155, another component of the industrial system 105, or a combination thereof over one or more communication networks or wired or wireless connections (e.g., the cross-controller interface 180, the communication network 160, or a combination thereof). Alternatively, or in addition, in some configurations, the communication interface 210 includes a communication port that may receive a communication medium or cable. In some examples, the communication interface 210 may facilitate communication using Ethernet protocols or technology. Accordingly, in some examples, the communication interface 210 may be an Ethernet port that may receive an Ethernet cable (e.g., as the cross-controller interface 180).

The electronic processor 200 may include a microprocessor, an application-specific integrated circuit ("ASIC"), a central processing unit ("CPU"), or another suitable electronic device for processing data, and the memory 205 includes a non-transitory, computer-readable storage medium. The electronic processor 200 is configured to retrieve instructions and data from the memory 205 and execute the instructions.

As one example, as illustrated in FIG. 2, the memory 205 may include a cache coherency policy 250 and embedded software 255 (e.g., a control program). The electronic processor 200 may execute the cache coherency policy 250 and the embedded software 255. For example, the electronic processor 200 may implement or otherwise provide cache coherency protocols or technology based on the cache coherency policy 250. In some examples, the electronic processor 200 may access the cache coherency policy 250 and perform cache coherency related tasks (e.g., generating and transmitting messages to other devices related to changes to a stored datum or variable). In some configurations, the electronic processor 200 may implement or otherwise execute the embedded software 255 as part of a control system for the industrial system 105 (e.g., in order to execute an industrial process performed by the industrial system 105). Accordingly, in some configurations, the electronic processor 200 may execute the cache coherency policy 250, the embedded software 255, or a combination thereof to facilitate distributed processing for the industrial system 105, data coherency across, e.g., the industrial controllers 155 of the industrial system 105, or a combination thereof.

In some configurations, cache coherency may be provided as firmware controlled coherency that updates local cache controller tag states based on messages received and broadcasts notification messages regarding state changes of a local cacheable memory address line (e.g., such as a cacheable memory address line of the industrial controller 155). A software based method of packetizing cache coherency protocol may provide the benefit of leveraging off-the-shelf hardware. Accordingly, in some configurations, the electronic processor 200 may implement cache coherency (e.g., the cache coherency policy 250) as firmware controlled coherency.

Alternatively, or in addition, in some configurations, cache coherency (e.g., the cache coherency policy 250) may be implemented using firmware, including, e.g., accelerated firmware methods. For example, a cache memory controller may be used and can include a snoop control unit ("SCU") that may be configured to accelerate firmware controlled coherency (e.g., the cache coherency policy 250). The SCU may also be packetized. Alternatively, or in addition, in some configurations, cache coherency (e.g., the cache coherency policy 250) may be implemented using hardware, including, e.g., dedicated hardware. For instance, the electronic processor 200 may support cache coherency (e.g., the cache coherency policy 250) using dedicated hardware. For example, ARM chips may be utilized to accelerate cache coherency (e.g., the cache coherency policy 250), which is implemented using hardware, such as, e.g., AXI Coherency Extensions ("ACE") or a Cache Coherency Interconnect ("CCI"). Accordingly, in some configurations, connections to such hardware units with an Ethernet packetization engine may improve performance. For example, some configurations may include an Ethernet packet creation hardware engine attached to a standard cache coherency port that intercepts the hardware cache coherency messages and packetizes them for standard Ethernet.

Accordingly, in some configurations, the industrial controllers 155 may be connected via an Ethernet cable (or other Ethernet communication medium or media) (e.g., as the cross-controller interface 180). The Ethernet cable may establish (or otherwise provide) a communication channel between the interconnected industrial controllers 155. In some configurations, the communication channel established via the Ethernet cable (e.g., the cross-controller interface 180) may be utilized to facilitate cache-coherency across the interconnected industrial controllers 155. As one example, in some configurations, a first industrial controller 155A may be interconnected to a second industrial controller 155B via the cross-controller interface 180, which may include an Ethernet cable. In some instances, the cross-controller interface 180 may include a cache-coherency channel. The cache-coherency channel may be utilized by interconnected industrial controllers 155 to communicate cache-coherency related messages or notifications. For instance, the first industrial controller 155A (e.g., via an electronic processor or CPU of the first industrial controller 155A) may access and execute the cache coherency policy 250 (e.g., during execution of the embedded software 255). By executing the cache coherency policy 250, the first industrial controller 155A may maintain data coherency with the second industrial controller 155B (e.g., via communicating with the second industrial controller 155B over the cache-coherency channel provided via the cross-controller interface 180).

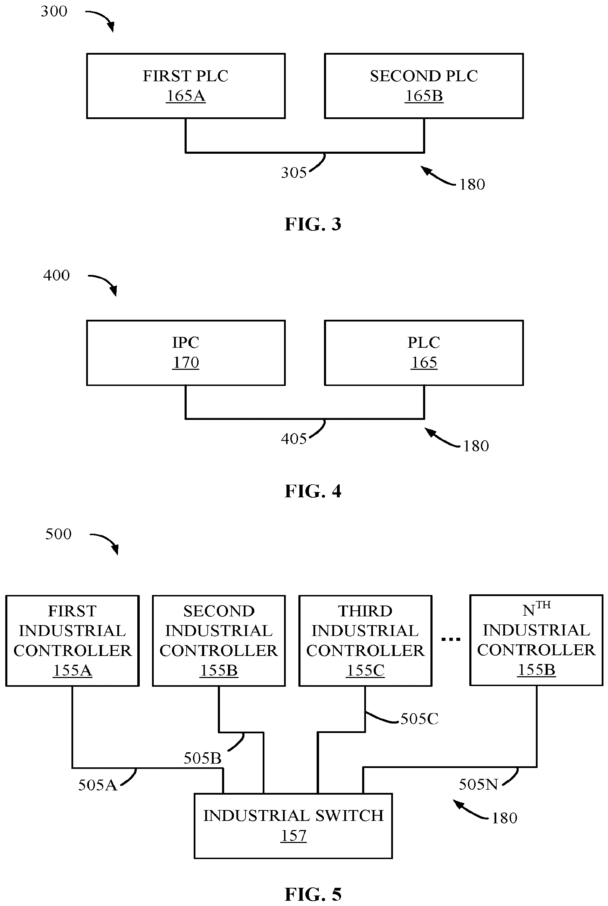

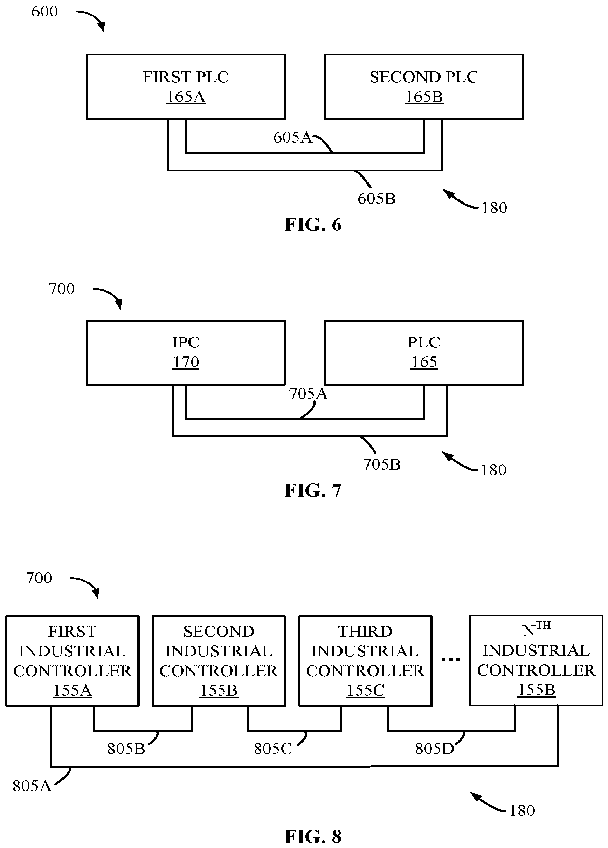

FIGS. 3-8 illustrate example distributed controller connection arrangements according to some configurations. FIGS. 3-5 illustrate distributed controller arrangements that may include a single distributed processing port. FIGS. 6-8 illustrate distributed controller arrangements having a device level ring ("DLR") topology for distributed processing ports.

As noted above, FIGS. 3-5 illustrate distributed controller arrangements that may include a single distributed processing port. For example, FIG. 3 illustrates an example distributed controller connection arrangement 300 including a first PLC 165A and a second PLC 165B (e.g., as a two PLC distributed processing arrangement). As illustrated in the example of FIG. 3, the first PLC 165A and the second PLC 165B may be connected via an Ethernet cable, where the Ethernet cable may provide a single distributed processing communication channel 305 (e.g., as the cross-controller interface 180). In some configurations, the communication channel 305 may be a cache-coherency channel for maintaining cache-coherency across the first PLC 165A and the second PLC 165B.

As another example, FIG. 4 illustrates an example distributed controller connection arrangement 400 including an IPC 170 and a PLC 165 (e.g., as an IPC/PLC distributed processing arrangement). As illustrated in the example of FIG. 4, the IPC 170 and the PLC 165 may be connected via an Ethernet cable, where the Ethernet cable may provide a single distributed processing communication channel 405 (e.g., as the cross-controller interface 180). In some configurations, the communication channel 405 may be a cache-coherency channel for maintaining cache-coherency across the IPC 170 and the PLC 165.

As yet another example, FIG. 5 illustrates an example distributed controller connection arrangement 500 including a plurality of industrial controllers 155 (e.g., a first industrial controller 155A, a second industrial controller 155B, a third industrial controller 155C, and an Nth industrial controller 155N) and the industrial switch 157 (e.g., as a switched three to n PLC or IPC distributed processing arrangement). Accordingly, the plurality of industrial controllers 155A-N included in the example distributed controller connection arrangement 500 of FIG. 5 may include one or more PLCs 165, one or more IPCs 170, or a combination thereof. As illustrated in the example of FIG. 5, the industrial controllers 155A-155N and the industrial switch 157 may be connected via an Ethernet cable, where the Ethernet cable may provide single distributed processing communication channels 505A-505N (e.g., as the cross-controller interface 180). In some configurations, the communication channels 505A-505N may be cache-coherency channels for maintaining cache-coherency across the industrial controllers 155A-155N.

As noted above, FIGS. 6-8 illustrate distributed controller arrangements having a device level ring ("DLR") topology for distributed processing ports. For example, FIG. 6 illustrates an example distributed connection arrangement 600 including a first PLC 165A and a second PLC 165B in a DLR topology (e.g., as a two PLC distributed processing arrangement). As illustrated in the example of FIG. 6, the first PLC 165A and the second PLC 165B may be connected via an Ethernet cable, where the Ethernet cable may provide two distributed processing communication channels (represented in FIG. 6 as a first channel 605A and a second channel 605B) (e.g., as the cross-controller interface 180). In some configurations, the communication channels 605A-605B may be cache-coherency channels for maintaining cache-coherency across the first PLC 165A and the second PLC 165B.

As another example, FIG. 7 illustrates an example distributed controller connection arrangement 700 including the IPC 170 and the PLC 165 in a DLR topology (e.g., as an IPC/PLC distributed processing arrangement). As illustrated in the example of FIG. 7, the IPC 170 and the PLC 165 may be connected via an Ethernet cable, where the Ethernet cable may provide two distributed processing communication channels (represented in FIG. 7 as a first channel 705A and a second channel 705B (e.g., as the cross-controller interface 180). In some configurations, the communication channels 705A-705B may be cache-coherency channels for maintaining cache-coherency across the IPC 170 and the PLC 165.

As yet another example, FIG. 8 illustrates an example distributed controller connection arrangement 800 including a plurality of industrial controllers 155 in a DLR topology (e.g., the first industrial controller 155A, the second industrial controller 155B, the third industrial controller 155C, and the Nth industrial controller 155N) (e.g., as a three to n PLC or IPC distributed processing arrangement). Accordingly, the plurality of industrial controllers 155A-N included in the example distributed controller connection arrangement 800 of FIG. 8 may include one or more PLCs 165, one or more IPCs 170, or a combination thereof. As illustrated in the example of FIG. 8, the industrial controllers 155A-155N may be connected via an Ethernet cable, where the Ethernet cable may provide distributed processing communication channels 805A-805N (e.g., as the cross-controller interface 180). In some configurations, the communication channels 805A-805N may be cache-coherency channels for maintaining cache-coherency across the industrial controllers 155A-155N.

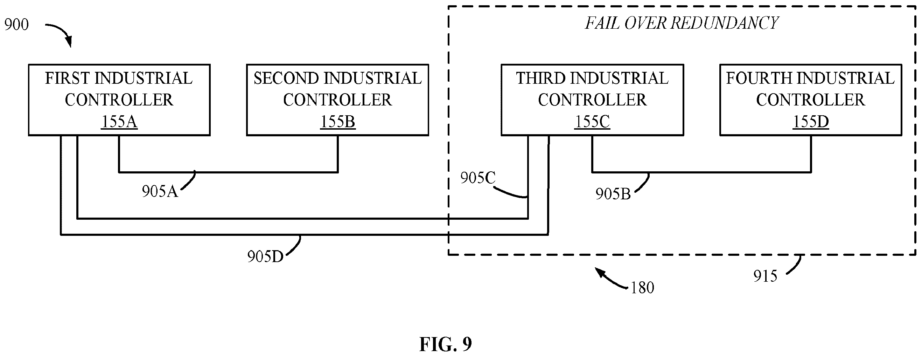

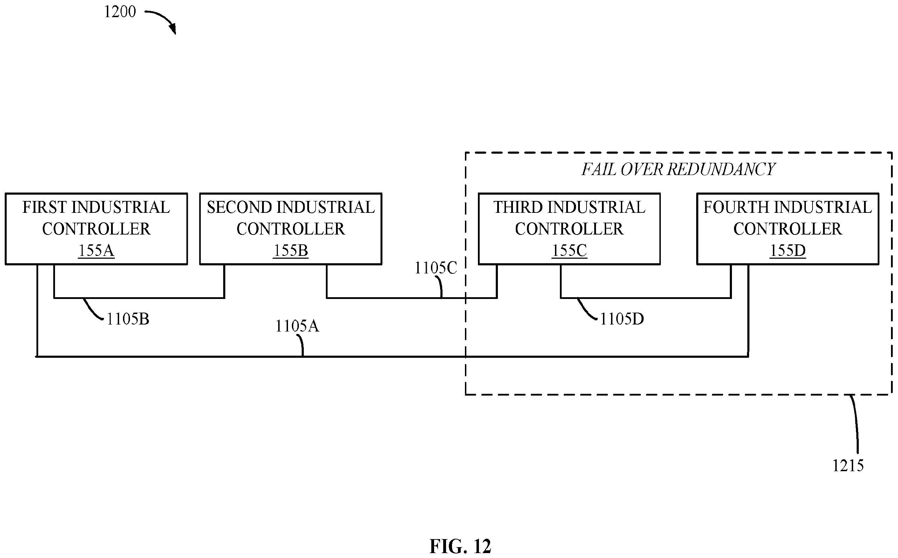

FIGS. 9-14 illustrate example distributed controller connection arrangements with remote fail over redundancy according to some configurations. FIGS. 9-11 illustrate distributed controller arrangements with remote fail over redundancy that may include a single distributed processing port. FIGS. 12-14 illustrate distributed controller arrangements with remote fail over redundancy having a DLR topology for distributed processing ports.

For example, FIG. 9 illustrates an example distributed controller connection arrangement 900 including a first industrial controller 155A, a second industrial controller 155B, a third industrial controller 155C, and a fourth industrial controller 155D (e.g., as a two industrial controller distributed processing arrangement with remote fail over redundancy (represented in FIG. 9 by reference numeral 915)). As illustrated in the example of FIG. 9, the first industrial controller 155A, the second industrial controller 155B, the third industrial controller 155C, and the fourth industrial controller 155D may be connected via an Ethernet cable, where the Ethernet cable may provide single distributed processing communication channels 905A-905D (e.g., as the cross-controller interface 180).

In some configurations, the third communication channel 905C and the fourth communication channel 905D may be fault redundancy channels. For instance, the third communication channel 905C and the fourth communication channel 905D may provide a failover direct connection between the first industrial controller 155A and the third industrial controller 155C such that, in the event of a fault or fail over (e.g., of the first industrial controller 155A), the third industrial controller 155C (e.g., and the fourth industrial controller 155B) may provide remote fail over redundancy. In some configurations, the first communication channel 905A and the second communication channel 905B may be cache-coherency channels for maintaining cache-coherency across the first industrial controller 155A and the second industrial controller 155B and the third industrial controller 155C and the fourth industrial controller 155D, respectively.

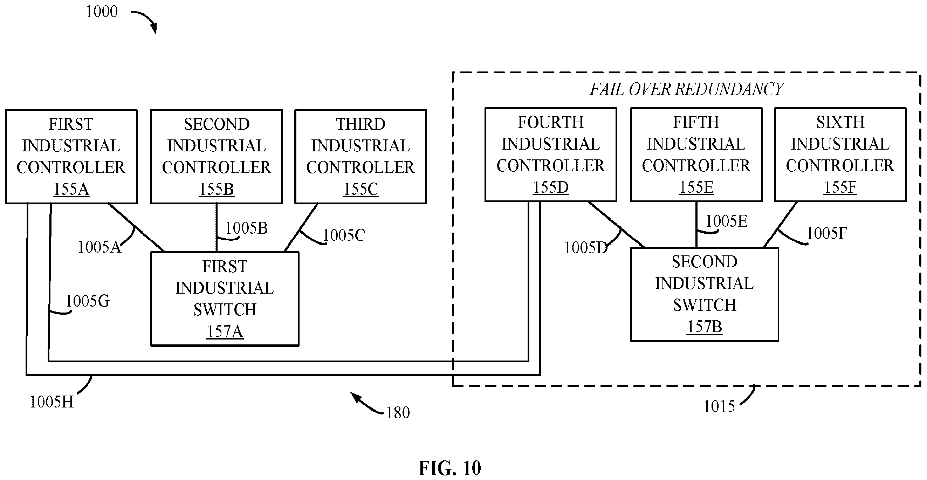

As another example, FIG. 10 illustrates an example distributed controller connection arrangement 1000 including a plurality of industrial controllers 155 (e.g., a first industrial controller 155A, a second industrial controller 155B, a third industrial controller 155C, a fourth industrial controller 155D, a fifth industrial controller 155E, and a sixth industrial controller 155F), a first industrial switch 157A, and a second industrial switch 157B (e.g., as a switched three industrial controller distributed processing arrangement with remote fail over redundancy (represented in FIG. 10 by reference numeral 1015)). The plurality of industrial controllers 155A-155F included in the example distributed controller connection arrangement 1000 of FIG. 10 may include one or more PLCs 165, one or more IPCs 170, or a combination thereof. As illustrated in the example of FIG. 10, the industrial controllers 155A-155F and the industrial switches 157A-157B may be connected via Ethernet cables, where the Ethernet cables may provide single distributed processing communication channels 1005A-1005H (e.g., as the cross-controller interface 180).

In some configurations, the seventh communication channel 1005G and the eight communication channel 1005H may be fault redundancy channels. For instance, the seventh communication channel 1005G and the eight communication channel 1005H may provide a failover direct connection between the first industrial controller 155A and the fourth industrial controller 155D such that, in the event of a fault or fail over associated with the first industrial controller 155A, the second industrial controller 155B, the third industrial controller 155C, or a combination thereof), the fourth industrial controller 155D (including, e.g., the fifth industrial controller 155E, the sixth industrial controller 155F, or a combination thereof) may provide remote fail over redundancy (represented in FIG. 10 by reference numeral 1015). In some configurations, the first-sixth communication channels 1005A-1005F may be cache-coherency channels for maintaining cache-coherency across the interconnected industrial controllers 155.

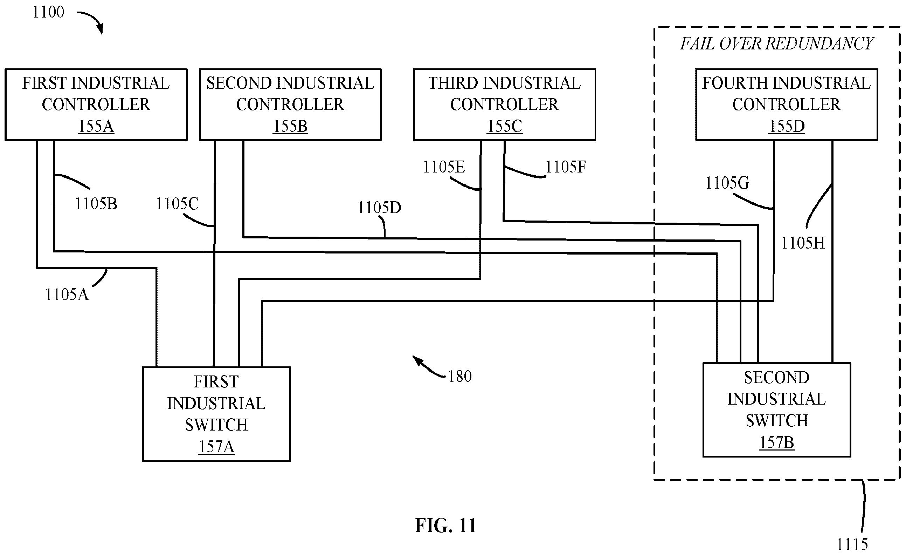

As yet another example, FIG. 11 illustrates an example distributed controller connection arrangement 1100 including a plurality of industrial controllers 155 (e.g., a first industrial controller 155A, a second industrial controller 155B, a third industrial controller 155C, and a fourth industrial controller 155D), a first industrial switch 157A, and a second industrial switch 157B (e.g., as a switched three industrial controller distributed processing arrangement with execution task redistribution and network redundancy (represented in FIG. 11 by reference numeral 1115), such as, e.g., a Packet Redundancy Protocol). The plurality of industrial controllers 155A-155D included in the example distributed controller connection arrangement 1100 of FIG. 11 may include one or more PLCs 165, one or more IPCs 170, or a combination thereof. As illustrated in the example of FIG. 11, the industrial controllers 155A-155D and the industrial switches 157A-157B may be connected via Ethernet cables, where the Ethernet cables may provide single distributed processing communication channels 1105A-1105H (e.g., as the cross-controller interface 180).

In some configurations, the communication channels 1105A-1105H may be cache-coherency channels for maintaining cache-coherency across the interconnected industrial controllers 155A-155D. In some configurations, tasks on the first industrial controller 155A, the second industrial controller 155B, the third industrial controller 155C, or a combination thereof may be reassigned to the fourth industrial controller 155D in the event of a fault or fail over of the first industrial controller 155A, the second industrial controller 155B, the third industrial controller 155C, or a combination thereof. Additionally, in some configurations, the second industrial switch 157B may provide network redundancy in the event of a fault or fail over of the first industrial switch 157A.

As another example, FIG. 12 illustrates an example distributed controller connection arrangement 1200 including a plurality of industrial controllers 155 in a DLR topology (e.g., the first industrial controller 155A, the second industrial controller 155B, the third industrial controller 155C, and the fourth industrial controller 155D) (e.g., as a two industrial controller distributed processing with remote fail over redundancy arrangement). The plurality of industrial controllers 155A-155D included in the example distributed controller connection arrangement 1200 of FIG. 12 may include one or more PLCs 165, one or more IPCs 170, or a combination thereof. As illustrated in the example of FIG. 12, the industrial controllers 155A-155D may be connected via an Ethernet cable, where the Ethernet cable may provide distributed processing communication channels 1205A-1205D (e.g., as the cross-controller interface 180). In some configurations, the communication channels 1205A-1205D may be cache-coherency channels for maintaining cache-coherency across the industrial controllers 155A-155D. As illustrated in FIG. 12, the third industrial controller 155C and the fourth industrial controller 155D may provide fail over redundancy (represented in FIG. 12 by reference numeral 1215). For instance, the third industrial controller 155C may provide fail over redundancy for the first industrial controller 155A and the fourth industrial controller 155D may provide fail over redundancy for the second industrial controller 155B.

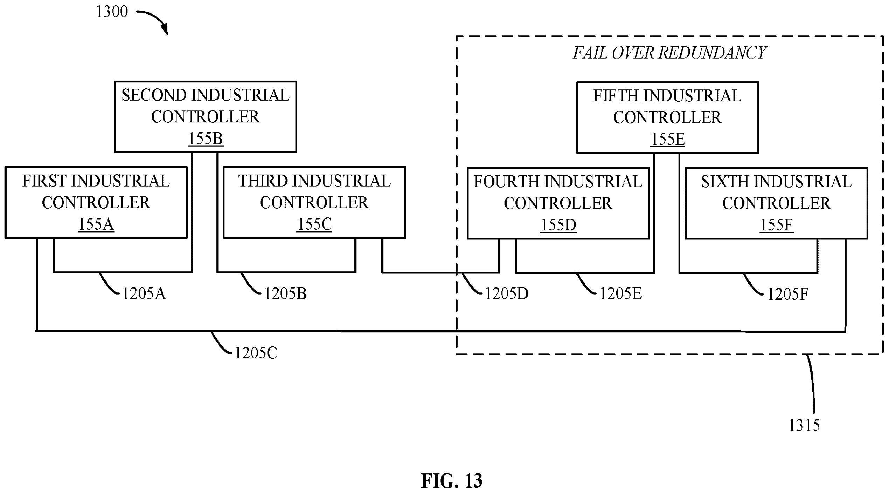

As yet another example, FIG. 13 illustrates an example distributed controller connection arrangement 1300 including a plurality of industrial controllers 155 in a DLR topology (e.g., the first industrial controller 155A, the second industrial controller 155B, the third industrial controller 155C, the fourth industrial controller 155D, the fifth industrial controller 155E, and the sixth industrial controller 155F) (e.g., as a three industrial controller distributed processing with remote fail over redundancy arrangement). The plurality of industrial controllers 155A-155F included in the example distributed controller connection arrangement 1300 of FIG. 13 may include one or more PLCs 165, one or more IPCs 170, or a combination thereof. As illustrated in the example of FIG. 13, the industrial controllers 155A-155F may be connected via an Ethernet cable, where the Ethernet cable may provide distributed processing communication channels 1305A-1305F (e.g., as the cross-controller interface 180). In some configurations, the communication channels 1305A-1305F may be cache-coherency channels for maintaining cache-coherency across the industrial controllers 155A-155F. As illustrated in FIG. 13, the fourth industrial controller 155D, the fifth industrial controller 155E, and the sixth industrial controller 155F may provide fail over redundancy (represented in FIG. 13 by reference numeral 1315). For instance, the fourth industrial controller 155D may provide fail over redundancy for the first industrial controller 155A, the fifth industrial controller 155E may provide fail over redundancy for the second industrial controller 155B, and the sixth industrial controller 155F may provide fail over redundancy for the third industrial controller 155C.

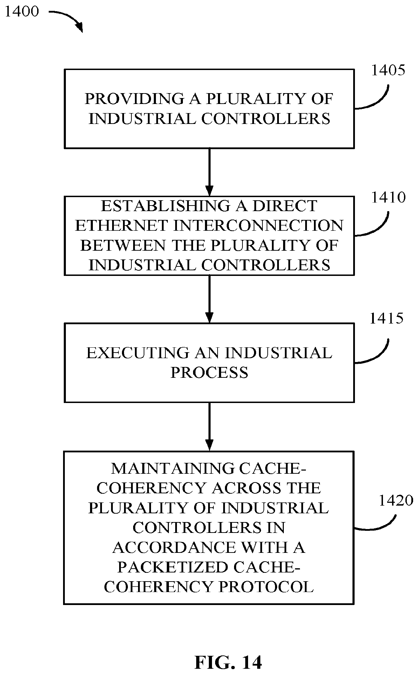

FIG. 14 is a flowchart illustrating a method 1400 of providing distributed controller connections within industrial systems according to some configurations. The method 1400 is described as being performed by the industrial controller(s) 155 and, in particular, the electronic processor(s) 200. However, as noted herein, the functionality described with respect to the method 1400 may be performed by other devices, such as another component included in the industrial system 105, or a combination thereof, distributed among a plurality of devices, or a combination thereof.

As illustrated in FIG. 14, the method 1400 may include providing the industrial controllers 155 (at block 1405). For instance, in some configurations, one or more of the industrial controllers 155 (e.g., the first industrial controller 155A, the second industrial controller 155B, etc.) may be provided for implementation within the industrial system 105. As noted herein, the industrial controllers 155 may provide distributed processing (or coprocessing) for the industrial system 105 (or an industrial process or component thereof). For example, in some instances, where the industrial process for the industrial system 105 is a motion control process, each industrial controller 155 may provide processing for an axis of motion.

The method 1400 may include establishing a direct Ethernet interconnection (e.g., the cross-controller interface 180) between two or more of the industrial controllers 155 (at block 1410). In some configurations, establishing the direct Ethernet interconnection may include connecting two or more of the industrial controllers 155 using Ethernet (e.g., connecting an Ethernet port of a first industrial controller 155A to a first connector or plug of an Ethernet cable and connecting an Ethernet ort of the second industrial controller 155B to a second connector or plug of the Ethernet cable).

In some configurations, providing the industrial controllers 155 and establishing the direct Ethernet interconnection (e.g., blocks 1405 and 1410) may include arranging components of the industrial system 105 (e.g., including the industrial controllers 155 and one or more Ethernet physical media or cables) in one of the distributed controller connection arrangements illustrated in FIGS. 3-13 and described herein with respect to FIGS. 3-13.

The method 1400 may include executing, with the industrial controllers 155, an industrial process of the industrial system 105 (at block 1415). In some configurations, the industrial controllers 155 may execute the industrial process (or portions thereof) by accessing and executing the embedded software 255. While the industrial controllers 155 execute the industrial process (or portions thereof), the industrial controllers 155 may maintain cache-coherency across the interconnected industrial controllers 155 (at block 1420). In some configurations, cache-coherency may be maintained in accordance with or utilizing the cache coherency policy 250, such as, e.g., a packetized cache-coherency protocol.

What has been described above includes examples of the disclosed technology. It is, of course, not possible to describe every conceivable combination of components or methodologies for purposes of describing the disclosed technology, but one of ordinary skill in the art may recognize that many further combinations and permutations of the disclosed technology are possible. Accordingly, the disclosed technology is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed technology. In this regard, it will also be recognized that the disclosed technology includes a system as well as a computer-readable medium having computer-executable instructions for performing the acts and/or events of the various methods of the disclosed technology.

In addition, while a particular feature of the disclosed technology may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

## Claims

1. A system for connecting distributed controllers within industrial systems, the system comprising:
a cross-controller interface including an Ethernet physical media configured to establish a communication channel to maintain cache-coherency across a plurality of industrial controllers of an industrial system;
a first industrial controller of the plurality of industrial controllers, the first industrial controller configured to control at least a first portion of an industrial process of the industrial system; and
a second industrial controller of the plurality of industrial controllers, the second industrial controller directly connected to the first industrial controller via the cross-controller interface and configured to control at least a second portion of the industrial process of the industrial system.

2. The system of claim 1, wherein the first industrial controller is an industrial personal computer ("IPC") and the second industrial controller is a programmable logic controller ("PLC"), or
wherein the first industrial controller and the second industrial controller are PLCs.

3. The system of claim 1 or 2, wherein the Ethernet physical media includes an Ethernet cable.

4. The system of one of claims 1 to 3, wherein the cross-controller interface is a secure private channel between the first industrial controller and the second industrial controller.

5. The system of one of claims 1 to 4, wherein the second industrial controller is configured to execute, using packet redundancy protocol, task redistribution and network redundancy for the first industrial controller and the second industrial controller.

6. The system of one of claims 1 to 5, wherein the industrial process of the industrial system is a motion control process, and wherein the first industrial controller is configured to perform processing for a first motion axis of the motion control process and the second industrial controller is configured to perform processing for a second motion axis of the motion control process.

7. The system of claim 6, wherein the first industrial controller and the second industrial controller provide distributed motion control for the industrial system.

8. The system of one of claims 1 to 7, further comprising:
a third industrial controller of the plurality of industrial controllers, the third industrial controller directly connected to at least one of the first industrial controller of the second industrial controller via the cross-controller interface.

9. The system of claim 8, at least one of:
wherein the third industrial controller is a PLC;
wherein the first industrial controller, the second industrial controller, and the third industrial controller provide co-processing functionality for the industrial system;
wherein the third industrial controller provides fail over redundancy for at least one of the first industrial controller or the second industrial controller; and
wherein the first industrial controller, the second industrial controller, and the third industrial controller are arranged in a device level ring ("DLR") topology.

10. The system of claim 8 or 9, further comprising:
a fourth industrial controller of the plurality of industrial controllers, wherein the fourth industrial controller is directly connected to at least one of the first industrial controller, the second industrial controller, or the third industrial controller via the cross-controller interface,
wherein the third industrial controller is configured to provide fail over redundancy for the first industrial controller when the first industrial controller fails and the fourth industrial controller is configured to provide fail over redundancy for the second industrial controller when the second industrial controller fails.

11. A method of providing distributed controller connections within industrial systems, the method comprising:
providing a plurality of industrial controllers for an industrial system, wherein the plurality of industrial controllers are configured to perform coprocessing for an industrial process of the industrial system;
establishing, with an Ethernet cable, a direct Ethernet interconnect between a first industrial controller of the plurality of industrial controllers and a second industrial controller of the plurality of industrial controllers;
executing, with the first industrial controller and the second industrial controller, the industrial process of the industrial system; and
while executing the industrial process with the first industrial controller and the second industrial controller, maintaining cache-coherency across the plurality of industrial controllers in accordance with a packetized cache-coherency protocol.

12. The method of claim 11, wherein establishing the direct Ethernet interconnect between the first industrial controller and the second industrial controller includes receiving, at an Ethernet port of the first industrial controller, a first connector of the ethernet cable and receiving, at an Ethernet port of the second industrial controller, a second connector of the ethernet cable.

13. The method of claim 11 or 12, wherein establishing the direct Ethernet interconnect between the first industrial controller and the second industrial controller includes establishing the direct Ethernet interconnect between a) an IPC as the first industrial controller and a PLC as the second industrial controller, or b) a first PLC as the first industrial controller and a second PLC as the second industrial controller.

14. The method of one of claims 11 to 13, wherein providing the plurality of industrial controllers includes providing a third industrial controller, wherein the third industrial controller is configured to provide fail over redundancy for at least one of the first industrial controller or the second industrial controller.

15. A system for connecting distributed controllers within industrial systems, the system comprising:
an Ethernet physical media configured to facilitate a packetized cache-coherency protocol across a plurality of industrial controllers of an industrial system;
an industrial personal computer ("IPC") included in the plurality of industrial controllers, the IPC configured to control at least a first portion of an industrial process of the industrial system; and
a programmable logic controller ("PLC") included in the plurality of industrial controllers, the PLC directly connected to the PLC with the Ethernet physical media and configured to control at least a second portion of the industrial process of the industrial system.
